# EUROPÄISCHE PATENTANMELDUNG

(11) **EP 3 792 286 A1**
(43) Veröffentlichungstag der Anmeldung: **17.03.2021**
(21) Anmeldenummer: 19197555.6
(22) Anmeldetag: 16.09.2019
(51) Int. Cl.: C08B 1/06, C08B 15/06, D06B 1/00, D06B 23/02

(54) **VERFAHREN ZUR VORBEHANDLUNG UND ZUM FÄRBEN VON ZELLULOSE**

(71) Anmelder: Benninger AG, 9240 Uzwil (CH)
(72) Erfinder: Die Erfindernennung liegt noch nicht vor
(74) Vertreter: Hepp Wenger Ryffel AG

(57) **Zusammenfassung**

Verfahren zur Vorbehandlung und zum Färben von Zellulose (2), umfassend die Schritte: Bereitstellen einer Zellulose (2), die Durchführung einer Kationisierungsreaktion und die Durchführung einer Bleichreaktion mittels eines Bleichmittels, wobei das Bleichmittel mit Hilfe von mindestens einem Stabilisator stabilisiert ist.

## Beschreibung

Die Erfindung betrifft ein Verfahren und eine Vorrichtung zur Vorbehandlung und zum Färben von Zellulose, gemäss dem Oberbegriff der unabhängigen Ansprüche.

Aus dem Stand der Technik sind verschiedene Verfahren für die Vorbehandlung von Zellulose für ein anschliessendes Färbeverfahren bekannt. Bei einem klassischen Färbeverfahren werden Farbstoffmoleküle mit einem reaktiven "Anker" ausgestattet, um mit den Hydroxylgruppen der Zellulose eine Bindung eingehen zu können. Dabei wird typischerweise ein Farbstofffixiergrad zwischen 60 und 90% erreicht. Höhere Farbstofffixiergrade von nahezu 100% können unter Verwendung einer kationisierten Zellulose erreicht werden. Hierzu muss die negativ geladene Zellulosefaser jedoch in einem zusätzlichen Vorbehandlungsschritt kationisiert werden, was zu verlängerten Prozesszeiten und zu höheren Kosten führt.

In dem Dokument ZHANG, S. Combinative scouring, bleaching, and cationization pretreatment of greige knitted cotton fabrics for facilely achieving salt-free reactive dyeing. Molecules 2017, 22, 2235 wird eine Vorbehandlung für ein salzfreies Einfärben von Rohbaumwolle beschrieben. Zuerst werden die Wasch- und stabilisierten Bleichreagenzien hinzugegeben und später das Kationisierungsreagenz. Wird das Kationisierungsreagenz bereits zu Beginn der Bleichreaktion hinzugegeben, dann hat dies zur Folge, dass der Kationisierungsgrad der Baumwollfasern verringert wird.

Es ist die Aufgabe der vorliegenden Erfindung ein Verfahren und eine Vorrichtung zur Vorbehandlung und zum Färben von Zellulose zu schaffen, welche die Nachteile des Stands der Technik vermeiden und insbesondere ein Verfahren und eine Vorrichtung zur Vorbehandlung und zum Färben von Zellulose zu schaffen, die innerhalb kürzester Zeit einen Färbeprozess mit einem nahezu 100%igen Farbstofffixiergrad erreichen.

Diese Aufgabe wird durch ein Verfahren und eine Vorrichtung zur Vorbehandlung und zum Färben von Zellulose gemäss den unabhängigen Ansprüchen gelöst.

Erfindungsgemäss umfasst das Verfahren zur Vorbehandlung von Zellulose, die folgenden Schritte:
- Bereitstellen einer Zellulose in Form einer textilen Warenbahn, eines Fadens oder eines Faserverbundes.
- Bereitstellen von Behandlungsmitteln, welche Bleichmittel, mindestens einen Stabilisator und Kationisierungsmittel umfassen.
- Durchführung einer Kationisierungsreaktion, insbesondere mit Hilfe der Kationisierungsmittel zur Reaktion mit der Zellulose.
- Durchführung einer Bleichreaktion, insbesondere unter Verwendung von Wasserstoffperoxid.
Wobei das Bleichmittel mit Hilfe von mindestens einem kationischen oder nicht ionischen Stabilisator stabilisiert ist. Der Stabilisator gehört bevorzugt der Gruppe der organischen oder mineralisch basierten Stabilisatoren an. Hierbei sind insbesondere Tonerde basierte Produkte; Wasserglas, insbesondere Natriumsilikat; Magnesiumchlorid, Magnesiumsulfat und Phosphonate bevorzugt.

Die im beanspruchten Verfahren verwendete Zellulose ist ein natürlicher Rohstoff, wie zum Beispiel Baumwolle oder Leinen. Ausserdem werden aus Zellulose auch chemische Fasern wie Viskosefasern, Modalfasern oder Celluloseacetatfasern hergestellt. Die Vorbehandlung erfolgt beispielsweise an einem aus Zellulose hergestellten linearen textilen Gebilde, wie ein Garn oder Zwirn. Sie kann aber auch an einem Faserverbund oder Fadenverbund in Form eines flächenförmigen textilen Gebildes, wie Gewebe, Gewirke, Gestricke, Geflechte, Nähgewirke, Vliesstoff oder Filz, oder an einem räumlich textilen Gebilde, wie einem Schlauch oder einem Strumpf stattfinden.

Unter einer Kationisierungsreaktion ist die Reaktion zwischen Hydroxylgruppen der Zellulose mit einem Kationisierungsmittel zu verstehen. Das Kationisierungsmittel umfasst eine positiv geladene funktionelle Gruppe, welche auch nach der Reaktion mit der Zellulose noch zur Verfügung steht und in einer Folgereaktion mit einem negativ geladenen Farbstoffmolekül reagiert.

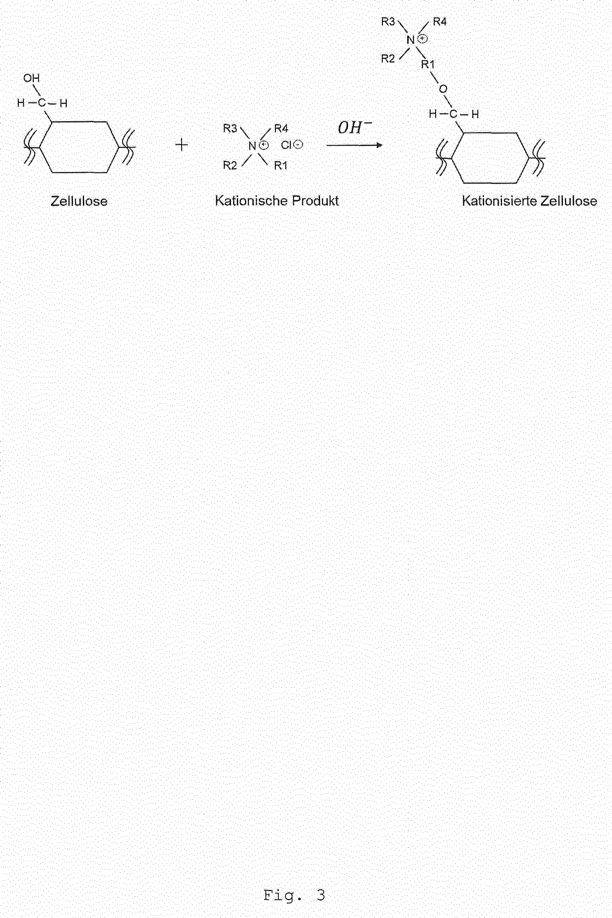

Als Kationisierungsmittel werden quaternäre Ammoniumsalze mit mindestens einer positiv geladenen Gruppe und mindestens einer funktionellen Gruppe zur Ausbildung einer Bindung mit der Zellulose verwendet. Besonders bevorzugt sind Kationisierungsmittel, die aliphatische Reste R1 bis R4 an einem Stickstoff umfassen, wobei der aliphatische Rest R1 eine Hydroxylgruppe umfasst, die eine Bindung mit der Zellulose ausbildet (Fig. 3).

Beispiele für mögliche Kationisierungsmittel sind Di-quaternäre Salze; quaternäre Polymere, wie 2-Propen-1-aminium, N,N-dimethyl-N-2-propen-1-yl chlorid, Polymere mit 1-chlorine-3-(2-propenamid)-2-propanol hydrochlorid.

Unter einer Bleichreaktion ist das Entfernen und Schwächen von unerwünschten Färbungen in der Zellulose zu verstehen. Hierbei werden beispielsweise unerwünschte Grundfärbungen und pflanzliche Verunreinigungen beseitigt. Zusätzlich werden Fettverunreinigungen extrahiert und die Saugfähigkeit gleichmässiger, was zu einer verbesserten und gleichmässigeren Farbaufnahme führt. Für die Bleichreaktion wird in der Textilindustrie üblicherweise Bleichmittel verwendet, das Wasserstoffperoxid umfasst, und den zum Bleichen benötigten aktiven Sauerstoff zur Verfügung stellt.

Eine Zugabe von Stabilisatoren lässt die Bleichreaktion langsam und kontrolliert ablaufen. Hierfür wird bevorzugt mindestens ein kationischer oder nicht ionischer Stabilisator verwendet. Beispiele hierfür stammen bevorzugt aus der Gruppe der organischen oder mineralisch basierten Stabilisatoren, vorzugsweise Tonerde basierte Stabilisatoren, Wasserglas, insbesondere Natriumsilikat, Magnesiumchlorid, Magnesiumsulfat oder Phosphonate.

Der Vorteil des beschriebenen Verfahrens besteht darin, dass durch die Verwendung von den genannten spezifischen Stabilisatoren keine Reaktion zwischen Stabilisator und dem für die Kationisierung verwendeten Kationisierungsmittel stattfindet.

Vorzugsweise erfolgen die Durchführung der Bleichreaktion, die Stabilisierung des Bleichmittels und die Kationisierungsreaktion zeitgleich. Zeitgleich bedeutet, dass Bleichmittel und Kationisierungsmittel zeitgleich zugegeben werden.

Dies hat den Vorteil, dass das Verfahren zur Vorbehandlung schnell und kosteneffizient ist.

Vorzugsweise werden die Durchführung der Bleichreaktion und die Kationisierungsreaktion in Gegenwart einer alkalisch reagierenden Substanz durchgeführt. Dies kann insbesondere unter Verwendung von Natronlauge, Kalilauge oder Natriumcarbonat erfolgen.

Alkalisch reagierende Substanzen haben den Vorteil, dass sie ein besonders geeignetes Milieu für die Bleich- und die Kationisierungsreaktion gewährleisten.

Vorzugsweise führt die Durchführung der Kationisierungsreaktion zur Ausbildung einer kovalenten Bindung zwischen Kationisierungsmittel und den Hydroxylgruppen der Zellulose.

Die Ausbildung von kovalenten Bindungen führt zu vorteilhaften, stabilen Bindungen zwischen den Hydroxylgruppen der Zellulose und dem Kationisierungsmittel.

Vorzugsweise handelt es sich bei dem beschriebenen Verfahren um ein kontinuierliches Verfahren.

Kontinuierliche Verfahren haben gegenüber den sogenannten Ausziehverfahren den Vorteil, dass sie sehr viel weniger Ressourcen, wie Wasser, Energie und Chemikalien benötigen.

Vorzugsweise wird das kontinuierliche Verfahren nach einem Imprägnierverfahren durchgeführt, wobei das Massenverhältnis eines aufgetragenen Behandlungsmittels zur Masse des textilen Substrats zwischen 0.5 und 1.5 vorliegt, vorzugsweise < 1.

Als Imprägnierverfahren wird in diesem Zusammenhang ein PAD Imprägnierverfahren angewendet, welches ein Imprägnierverfahren ist, das nach dem Prinzip des Zwangsauftrages ausgeführt wird.

Unter Behandlungsmittel ist in diesem Zusammenhang eine Mischung von Bleichmittel, mindestens einem Stabilisator und Kationisierungsmittel zu verstehen. Üblicherweise liegt Wasserstoffperoxid in dem Bleichmittel in einer Konzentration von 0.1 - 1.6 mol/kg vor, während der Stabilisator in einer Konzentration von 2-16 g/kg und das Kationisierungsmittel mit einer kationischen Ladung in einer Konzentration von 0.1 - 1 mol/kg (vgl. mit "Cationic Cotton, Reservations to Reality"; M. J. Farrell, P.J. Hauser; AATCC Review September/October 2003) vorliegen.

Dass das Massenverhältnis an aufgetragenem Behandlungsmittel zur Masse des textilen Substrats zwischen 0.5 und 1.5, vorzugsweise < 1 liegt, ist besonders vorteilhaft, da bei minimal eingesetzter Menge Behandlungsmittel ein optimales Ergebnis des Behandlungsverfahrens erreicht wird.

Vorzugsweise wird das Verfahren im Wesentlichen bei Raumtemperatur oder bei Temperaturen zwischen 40 °C und 80 °C, insbesondere zwischen 60°C und 70°C durchgeführt. Oder aber das Verfahren wird unter Sattdampfatmosphäre bei 100 °C durchgeführt.

Die Durchführung des Verfahrens bei Raumtemperatur hat den Vorteil eines geringen Energieverbrauchs, was zu geringeren Prozesskosten führt. Eine Durchführung des Verfahrens bei Temperaturen zwischen 40 °C und 80 °C oder bei 100 °C führt zu optimierten Prozessbedingungen, beschleunigt die Prozessreaktionen und verkürzt somit die gesamte Prozesszeit.

Vorzugsweise wird nach der Durchführung der Kationisierungsreaktion eine farbgebende Behandlung durch Färbung oder Bedrucken der Zellulose durchgeführt. Die farbgebende Behandlung wird mittels eines Behandlungsmittels, insbesondere Färbemittels durchgeführt, welches ein anionisches wasserlösliches Färbemittel oder ein unlösliches Pigment umfasst. Als Behandlungsmittel können, Reaktiv-, Säuren-, Küpen-, Dispersionsfarbstoffe oder Pigmentfarbstoffe verwendet werden.

Die Vorbehandlung ist besonders vorteilhaft, weil sie in den genannten Färbeverfahren zu einem Farbstofffixiergrad von nahezu 100% führt.

Behandlungsmittel sind Bleichmittel, Stabilisatoren, Kationisierungsmittel, Färbemittel.

Die Aufgabe wird weiter durch eine Vorrichtung zur Behandlung eines textilen Substrats, einer Warenbahn, eines Fadens oder eines Faserverbundes gelöst, welche insbesondere mit dem zuvor beschriebenen Verfahren durchgeführt wird. Die Vorrichtung umfasst eine Zuführvorrichtung für Behandlungsmittel, ein Reservoir zur Aufnahme der Behandlungsmittel und eine Zirkulationsvorrichtung.

Textile Substrate werden aus Garnen oder Faservliesen durch verschiedene Techniken wie Weben, Stricken, Tuften und Vliesbildung gebildet.

Der Vorteil einer Zirkulationsvorrichtung besteht darin, dass zusammen mit der Zuführvorrichtung sich die Behandlungsmittel effizient und gleichmässig verteilen lassen.

Vorzugsweise hat das Reservoir mindestens einen, bevorzugt zwei Abläufe die mit der Zirkulationsvorrichtung verbunden sind. Bevorzugt umfasst die Zirkulationsvorrichtung zusätzlich einen Zulauf für neue Behandlungsmittel, so dass frische und rezirkulierte Behandlungsmittel miteinander mischbar sind.

Die beschriebene Anordnung hat den Vorteil, dass frische und rezirkulierte Behandlungsmittel derart gut durchmischt werden, dass eine optimale Nutzung der Behandlungsmittel stattfindet. Das Reservoir kann in Form eines Zwickels zwischen zwei Walzenrollen und zwei an den Walzenenden angeordneten Abdichtplatten ausgebildet sein. An den beiden Abdichtplatten ist beidseitig je ein Ablauf angeordnet. Weiter umfasst das Reservoir einen Niveausensor.

Vorteilhaft an dieser Anordnung ist der geringe Bedarf an Behandlungsmittel. Der Niveausensor stellt sicher, dass das Reservoir mit den Behandlungsmitteln nicht überläuft.

Das Reservoir kann in Form eines Tauchbeckens ausgebildet sein.

Die Möglichkeit der Verwendung eines Tauchbeckens hat den Vorteil, dass die Vorrichtung auch in eine bereits bestehende konventionelle Vorrichtung integriert werden kann.

Vorzugsweise ist die Zuführvorrichtung in Form eines Giesswerks, eines Überlaufwehrs oder einer Schlitzdüse ausgebildet. Ausserdem kann die Zuführvorrichtung in einer austauschbaren Form ausgebildet sein. Die Breite der Zuführvorrichtung beträgt 20 bis 100 % der Länge der Walzenrollen, bevorzugt 40 bis 100 % der Walzenrolle und besonders bevorzugt 80 bis 100% der Länge der Walzenrolle.

Es ist vorteilhaft, dass die Zuführvorrichtung austauschbar ist, so kann die Zuführvorrichtung flexibel an die gegebenen Bedingungen angepasst werden. Dass die Breite eines Giesswerks, eines Überlaufwehrs oder einer Schlitzdüse relativ zur Länge der Walzenrollen 20 bis 100 %, bevorzugt 40 bis 100 %, besonders bevorzugt 80 bis 100 % betragt, hat den Vorteil, dass das textile Substrat in seiner gesamten Breite einschliesslich des Randbereichs gleichmässig behandelt werden kann.

Vorzugsweise ist die längste Dimension des Giesswerks, der Schlitzdüse oder des Überlaufwehrs zwischen 50 bis 5400 mm. Bevorzugt liegt sie zwischen 1600 und 2400 mm.

Die Breite des textilen Substrats welche parallel zur längsten Dimension des Giesswerks, der Schlitzdüse oder des Überlaufwehrs verläuft ist weniger breit, als das Giesswerk, die Schlitzdüse oder das Überlaufwehr. Dies hat den Vorteil, dass das textile Substrat über die gesamte Breite gleichmässig und gleichzeitig behandelt wird.

Vorzugsweise besteht die Vorrichtung aus einem Material, welches beständig gegenüber den anwendbaren Reaktions- und Reinigungsmitteln ist. Dies können Natronlauge, Wasserglas, organische Netzmittel, Natriumdithionit und andere textilübliche Chemikalien sein.

Beständige Materialien können beispielsweise sein Stahl, Edelstahl, glasfaserverstärkte Kunststoffe, natürliche oder synthetische Kautschuke oder Holz. Diese Materialien haben den Vorteil, dass sie stabil genug sind , um einen Verschleiss gering zu halten und eine lange Nutzungsdauer gewährleisten zu können.

Vorzugsweise ist die Zirkulationsvorrichtung derart ausgelegt, dass ein Behandlungsmittel gleichmässig und ohne Unterbruch, bei einer Menge von 25-35 l/min und Meter Breite der Zuführvorrichtung oder bei viskositätserhöhten Behandlungsmitteln bei einer Menge von 20 l/min und Meter Breite der Zuführvorrichtung, über die Breite der Zuführvorrichtung dem Reservoir zuführbar ist.

Wobei die viskositätserhöhten Behandlungsmittel eine dynamische Viskosität in einem Bereich von 20 - 200 mPa*s bei 20 °C umfassen.

Die Breite der Zuführvorrichtung entspricht der längsten Dimension der Zuführvorrichtung und korrespondiert bevorzugt mit der Breite des textilen Substrats.

Ein solcher Zufluss des Behandlungsmittels, führt zu einer gleichmässigen Behandlung des textilen Substrats.

Die Aufgabe wird weiter durch ein Verfahren zum Färben eines textilen Substrats gelöst, welches unter Verwendung der zuvor beschriebenen Vorrichtung durchgeführt werden kann. Das Verfahren umfasst die Schritte:
- Bereitstellen eines textilen Substrats, insbesondere eines Substrats, welches mittels eines Verfahrens, wie vorhergehend beschrieben vorbehandelt worden ist.
- Bereitstellen eines Behandlungsmittels, insbesondere Färbemittels, bevorzugt ein anionisches wasserlösliches Färbemittel oder ein oder mehrere unlösliche Pigmente in einem Dispersionsmittel.
- Durchführung eines Färbevorgangs indem die Zellulose mit dem Behandlungsmittel in Kontakt gebracht wird.

Als Behandlungsmittel können, Reaktiv-, Säuren-, Küpen-, Dispersionsfarbstoffe oder Pigmentfarbstoffe verwendet werden.

Der Vorteil des beschriebenen Verfahrens besteht darin, dass das textile Substrat in gleichmässiger Qualität eingefärbt werden kann.

Vorzugsweise wird das Behandlungsmittel über zwei Abläufe im Reservoir abgeführt und in die Zuführvorrichtung geleitet. Bevorzugt werden über einen Zulauf in die Zuführvorrichtung neue Behandlungsmittel eingeleitet.

Das beschriebene Verfahren hat den Vorteil, dass frische und rezirkulierte Behandlungsmittel derart gut durchmischt werden, dass eine optimale Nutzung der Behandlungsmittel stattfindet. Vorzugsweise umfasst das Durchführen des textilen Substrats in das Reservoir folgende Schritte:
- Einführen des textilen Substrats in ein mit Behandlungsmittel gefülltes zwickelförmiges Reservoir.
- Durchführen des textilen Substrats zwischen zwei Walzenrollen.

Vorteilhaft an diesem Verfahren ist die gleichmässige Färbung.

Das Reservoir kann in Form eines Tauchbeckens ausgebildet sein.

Die Möglichkeit der Verwendung eines Tauchbeckens hat den Vorteil, dass die Vorrichtung auch in ein bereits bestehendes konventionelles Verfahren integriert werden kann.

Vorzugsweise wird das Behandlungsmittel, insbesondere das Färbemittel über eine Zuführvorrichtung in Form eines Giesswerks, eines Überlaufwehrs oder einer Schlitzdüse zugegeben. Dabei wird das Behandlungsmittel über eine Breite von 20 bis 100 % der Länge der Walzenrollen, insbesondere 40 bis 100 % der Länge der Walzenrollen, bevorzugt 80 bis 100 % der Länge der Walzenrollen, besonders bevorzugt über die Breite eines textilen Substrats, dessen Breite 200 mm kürzer ist als die Länge der Walzenrollen, zugegeben.

Die Zugabe des Behandlungsmittels, insbesondere des Färbemittels über ein Giesswerk, ein Überlaufwehr oder eine Schlitzdüse von 20 bis 100 % der Länge der Walzenrollen, insbesondere 40 bis 100 % der Länge der Walzenrollen, bevorzugt 80 bis 100 % der Länge der Walzenrollen, besonders bevorzugt über die Breite eines textilen Substrats, dessen Breite 200 mm kürzer ist als die Länge der Walzenrollen,, hat den Vorteil, dass das textile Substrat in seiner gesamten Breite einschliesslich des Randbereichs gleichmässig behandelt, insbesondere eingefärbt werden kann.

Vorzugsweise ist die Zuführvorrichtung in Form eines Giesswerks, eines Überlaufwehrs oder einer Schlitzdüse ausgebildet. Ausserdem kann die Zuführvorrichtung in einer austauschbaren Form ausgebildet sein. Die Breite der Zuführvorrichtung beträgt 20 bis 100 % der Länge der Walzenrollen, bevorzugt 40 bis 100 % der Walzenrolle und besonders bevorzugt 80 bis 100% der Länge der-Walzenrolle.

Es ist vorteilhaft, dass die Zuführvorrichtung austauschbar ist, so kann die Zuführvorrichtung flexibel an die gegebenen Bedingungen angepasst werden. Dass die Breite eines Giesswerks, eines Überlaufwehrs oder einer Schlitzdüse relativ zur Länge der Walzenrollen 20 bis 100 %, bevorzugt 40 bis 100 %, besonders bevorzugt 80 bis 100 % betragt, hat den Vorteil, dass das textile Substrat in seiner gesamten Breite einschliesslich des Randbereichs gleichmässig behandelt werden kann.

Vorzugsweise wird das Behandlungsmittel, insbesondere das Färbemittel über die längste Dimension des Giesswerks, der Schlitzdüse oder des Überlaufwehrs zwischen 50 bis 5400 mm, bevorzugt zwischen 1600 und 2400 mm zugegeben.

Die Zugabe des Behandlungsmittels über diese Länge hat den Vorteil, dass das textile Substrat über die gesamte Breite gleichmässig und gleichzeitig behandelt wird.

Vorzugsweise wird das Behandlungsmittel gleichmässig und ohne Unterbruch, bei einer Menge von 25-35 l/min und Meter der Breite der Zuführvorrichtung oder bei viskositätserhöhten Behandlungsmitteln bei einer Menge von 20 l/min und Meter der Breite der Zuführvorrichtung, über die Breite der Zuführvorrichtung dem Reservoir zugeführt.

Ein solcher Zufluss des Behandlungsmittels, führt zu einer gleichmässigen Behandlung des textilen Substrats.

Die Erfindung wird im Folgenden anhand von Ausführungsbeispielen in Figuren weiter erläutert. Hierbei zeigen:
- Figur 1:: Seitenansicht einer Vorrichtung in einer ersten Ausführungsform
- Figur 2:: Draufsicht einer Vorrichtung in einer ersten Ausführungsform

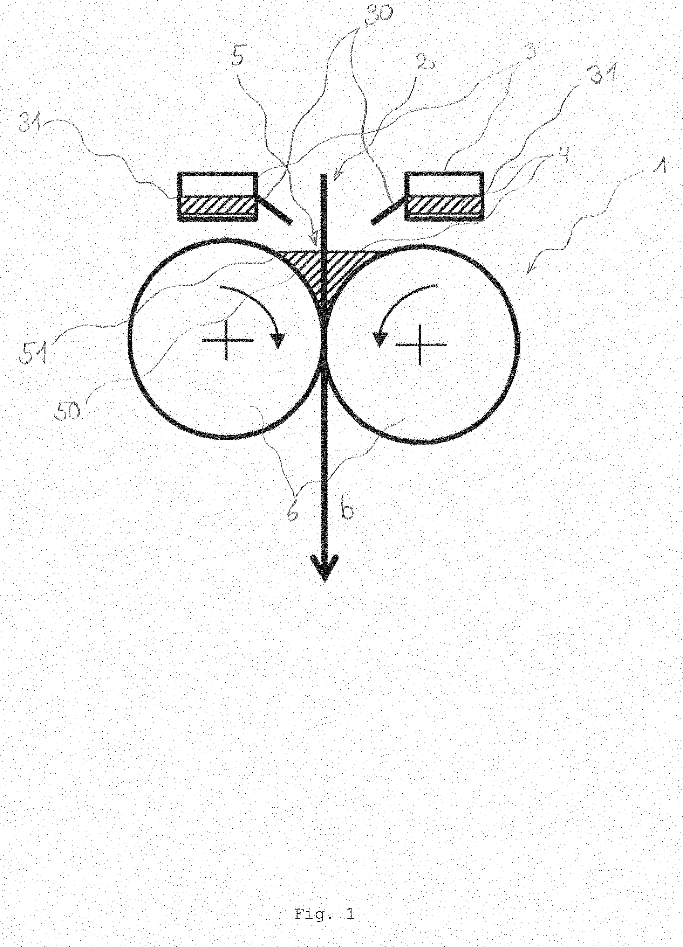

Eine in Figur 1 dargestellte Vorrichtung 1 dient zur Behandlung einer zellulosehaltigen textilen Gewebebahn 2, die in einem kontinuierlichen Verfahren bei Raumtemperatur in eine Bewegungsrichtung b fortbewegt wird.

Die Vorrichtung 1 umfasst ein Giesswerk 3 für die Zuführung 30 von Behandlungsmittel 4, welches in ein anionisches Färbemittel ist, einen Zwickel 5, der durch seitliche Dichtplatten 50 und einem Quetschwalzenpaar 6 ein Reservoir 5 ausbildet. Zudem zeigt Figur 1 einen Niveausensor 51, der ein Überlaufen der Behandlungsmittel 4 aus dem Zwickel 5 verhindert.

Das Giesswerk 3 führt das Behandlungsmittel 4 über die Zuführung 30 über deren gesamte Breite von 2400 mm gleichmässig und ohne Unterbruch an der zellulosehaltigen textilen Gewebebahn 2 entlang in den Zwickel 5. Hierbei werden 0.5 bis 1.5 kg Behandlungsmittel 4 auf 1 kg zellulosehaltige textile Gewebebahn 2 gegeben.

Die zellulosehaltige textile Gewebebahn 2 wird durch den Zwickel 5 und das Quetschwalzenpaar 6 hindurch geführt. Mit Hilfe des Behandlungsmittels 4 wird die zellulosehaltige textile Gewebebahn 2 eingefärbt.

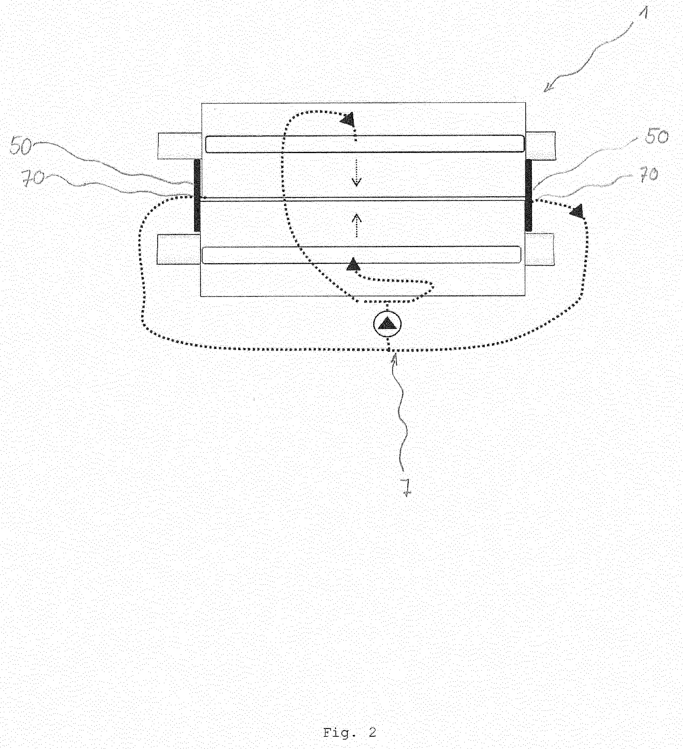

Figur 2 zeigt die Vorrichtung 1 zur Behandlung der zellulosehaltigen textilen Gewebebahn 2 und deren Zirkulationsvorrichtung 7 in der Draufsicht. Die Zirkulationsvorrichtung 7 umfasst je einen Ablauf 70 an den beiden seitlichen Dichtplatten 50, die am Zwickel 5 angeordnet sind, und einen Zulauf 31 an dem Giesswerk 3. Mit Hilfe der beiden Abläufe 70 kann das Behandlungsmittel 4 aus dem Zwickel 5 zurück in das Giesswerk 3 geführt werden. Über den Zulauf 31 wird dem Giesswerk 3 frisches Behandlungsmittel 4 zugeführt, welches sich mit dem rezyklierten Behandlungsmittel 4 aus dem Zwickel 5 vermischt und erneut zur Behandlung der zellulosehaltigen textilen Gewebebahn 2 verwendet wird.

## Patentansprüche

1. Verfahren zur Vorbehandlung von Zellulose (2), umfassend die Schritte:
- Bereitstellen einer Zellulose (2) in Form einer textilen Warenbahn, eines Fadens oder Faserverbundes;
- Bereitstellen von Behandlungsmittel, welche Bleichmittel, einen Stabilisator und Kationisierungsmittel umfassen;
- Durchführung einer Kationisierungsreaktion, insbesondere mit Hilfe der Kationisierungsmittel zur Reaktion mit der Zellulose (2) ;
- Durchführung einer Bleichreaktion mittels Bleichmittel, insbesondere mittels Wasserstoffperoxid,
wobei das Bleichmittel mit Hilfe von mindestens einem kationischen oder einem nicht ionischen Stabilisator stabilisiert ist,
bevorzugt aus der Gruppe der organischen oder mineralisch basierten Stabilisatoren,
insbesondere Tonerde basierte Produkte und/oder Wasserglas, insbesondere Natriumsilikat und/oder Magnesiumchlorid und/oder Magnesiumsulfat und/oder Phosphonate.

2. Verfahren nach Anspruch 1, **dadurch gekennzeichnet, dass** die Durchführung der Bleichreaktion, die Stabilisierung des Bleichmittels und die Kationisierungsreaktion im Wesentlichen zeitgleich erfolgen, wobei insbesondere Bleichmittel und Kationisierungsmittel zeitgleich zugegeben werden.

3. Verfahren nach einem der Ansprüche 1 oder 2, **dadurch gekennzeichnet, dass** die Durchführung der Bleichreaktion und der Kationisierungsreaktion in Gegenwart einer alkalisch reagierenden Substanz, insbesondere Natronlauge, Kalilauge oder Natriumcarbonat erfolgen.

4. Verfahren nach einem der vorhergehenden Ansprüche, **dadurch gekennzeichnet, dass** die Durchführung der Kationisierungsreaktion zur Ausbildung einer kovalenten Bindung zwischen Kationisierungsmittel und den Hydroxylgruppen der Zellulose (2) führt.

5. Verfahren nach einem der vorhergehenden Ansprüche, **dadurch gekennzeichnet, dass** es sich um ein kontinuierliches Verfahren handelt.

6. Verfahren nach Anspruch 5, **dadurch gekennzeichnet, dass** das kontinuierliche Verfahren nach einem Imprägnierverfahren durchgeführt wird, wobei das Massenverhältnis des aufgetragenen Behandlungsmittels (4) zur Masse des Textils zwischen 0.5 und 1.5 beträgt, vorzugsweise < 1.

7. Verfahren nach einem der vorhergehenden Ansprüche, **dadurch gekennzeichnet, dass** das Verfahren im Wesentlichen bei Raumtemperatur oder bei Temperaturen zwischen 40 °C und 80 °C, insbesondere zwischen 60°C und 70°C oder unter Sattdampfatmosphäre bei 100 °C durchgeführt wird.

8. Verfahren nach einem der vorhergehenden Ansprüche, **dadurch gekennzeichnet, dass** nach der Durchführung der Kationisierungsreaktion eine farbgebende Behandlung durch Färbung oder Bedrucken der Zellulose (2) mittels eines Behandlungsmittels (4) durchgeführt wird, wobei das Behandlungsmittel (4) ein anionisches wasserlösliches Färbemittel oder eine unlösliches Pigment, insbesondere ein Reaktiv-, Säure-, Küpen-, Dispersions- oder Pigmentfarbstoff ist.

9. Vorrichtung (1) zur Behandlung eines textilen Substrats in Form einer Warenbahn, eines Fadens oder Faserverbundes, insbesondere zur Durchführung eines Verfahrens nach den vorherigen Ansprüchen, umfassend eine Zuführvorrichtung (3) von Behandlungsmitteln (4), ein Reservoir (5) zur Aufnahme der Behandlungsmittel (4),
**dadurch gekennzeichnet, dass** die Vorrichtung (1) weiter eine Zirkulationsvorrichtung (7) zur Zirkulation der Behandlungsmittel (4), insbesondere einer Zirkulation vom Reservoir (5) zurück über die Zirkulationsvorrichtung (7) in das Reservoir (5), umfasst.

10. Vorrichtung nach Anspruch 9, **dadurch gekennzeichnet, dass** das Reservoir (5) mindestens einen, bevorzugt zwei Abläufe (70) hat, die mit der Zirkulationsvorrichtung (7) verbunden sind und bevorzugt die Zirkulationsvorrichtung (7) zusätzlich einen Zulauf (31) für neue Behandlungsmittel (4) umfasst, so dass frische und rezirkulierte Behandlungsmittel (4) mischbar sind.

11. Vorrichtung nach einem der Ansprüche 9 oder 10, **dadurch gekennzeichnet, dass** das Reservoir (4) in Form eines Zwickels zwischen zwei Walzenrollen (6) und zwei an den Walzenenden angeordneten Abdichtplatten (50) ausgebildet ist und beidseitig an den beiden Abdichtplatten (50) je ein Ablauf (70) angeordnet ist und das Reservoir (5) einen Niveausensor (51) umfasst.

12. Vorrichtung nach einem der Ansprüche 9 und 10, **dadurch gekennzeichnet, dass** das Reservoir (5) in Form eines Tauchbeckens ausgebildet ist.

13. Vorrichtung nach einem der Ansprüche 9 bis 12, **dadurch gekennzeichnet, dass** die Zuführvorrichtung (3) in Form eines Giesswerks, eines Überlaufwehrs oder einer Schlitzdüse und in austauschbarer Form ausgebildet ist, wobei deren Breite 20 bis 100 % der Länge einer der Walzenrollen (6) beträgt, bevorzugt 40 bis 100 %, besonders bevorzugt 80 bis 100 %.

14. Vorrichtung nach Anspruch 13, **dadurch gekennzeichnet, dass** die längste Dimension des Giesswerks, der Schlitzdüse oder des Überlaufwehrs zwischen 50 bis 5400 mm, vorzugsweise zwischen 1600 und 2400 mm liegt.

15. Vorrichtung nach einem der Ansprüche 9 bis 14, **dadurch gekennzeichnet, dass** die Zirkulationsvorrichtung (7) derart ausgelegt ist, dass ein Behandlungsmittel (4) gleichmässig und ohne Unterbruch, bei einer Menge von 25-35 l/min und Meter der Breite der Zuführvorrichtung oder bei viskositätserhöhten Behandlungsmitteln bei einer Menge von 20 l/min und Meter der Breite der Zuführvorrichtung, über die Breite der Zuführvorrichtung (3) dem Reservoir (5) zuführbar ist.

16. Verfahren zum Färben eines textilen Substrats, insbesondere unter Verwendung einer Vorrichtung nach den Ansprüchen 10 bis 16, umfassend die Schritte:
- Bereitstellen eines textilen Substrats, insbesondere eines Substrats, welches mittels eines Verfahrens, wie vorhergehend beschrieben vorbehandelt worden ist;
- Bereitstellen eines Behandlungsmittels, insbesondere Färbemittels, bevorzugt ein anionisches wasserlösliches Färbemittel oder ein oder mehrere unlösliche Pigmente in einem Dispersionsmittel;
- Durchführung eines Färbevorgangs indem die Zellulose mit dem Färbemittel in Kontakt gebracht wird.
